# EUROPÄISCHE PATENTANMELDUNG

(11) **EP 3 165 487 A1**
(43) Veröffentlichungstag der Anmeldung: **10.05.2017**
(21) Anmeldenummer: 15193568.1
(22) Anmeldetag: 08.11.2015
(51) Int. Cl.: B65H 51/32, B65H 51/10, H01R 43/052

(54) **LEITUNGSTRANSPORTVORRICHTUNG, INSBESONDERE FÜR ZU BEARBEITENDE KABEL IN KABELBEARBEITUNGSMASCHINEN**

(71) Anmelder: Schleuniger Holding AG, 3608 Thun (CH)
(72) Erfinder: MAZUR, Michael, 61209 Echzell (DE); SCHÄFER, Benjamin, 35649 Bischoffen (DE)
(74) Vertreter: Patentbüro Paul Rosenich AG

(57) **Zusammenfassung**

Eine Leitungstransportvorrichtung für zu bearbeitende Kabel in Kabelbearbeitungsmaschinen weist einen schwenkbar gelagerten Leitungsförderer (30) auf. Ein erster Antrieb (36a) bewegt den Leitungsförderer (30) um eine Schwenkachse (31). Der Leitungsförderer (30) weist ein angetriebenes Fördermittel (30a) wie beispielsweise einen um eine Antriebsrolle (30b) und eine weitere Rolle (30c) laufenden Förderriemen sowie gegenüberliegenden Andruckmittel (30d) auf. Ein zweiter Antrieb (36b) ist für das Fördermittel (30a) vorhanden. Die Drehachsen aller Rollen (30b, c, e, f) für Förder- und Andruckmittel (30a, 30d) sind parallel zueinander sowie parallel zur Schwenkachse (31) des Leitungsförders (30). Weiters ist auch eine Antriebsachse des Antriebs (36b) für die Förderrollen oder die angetriebenen Rollen (30b) des Leitungsförderers (30) mit einer der Drehachsen der Rollen (30b, c, e, f) deckungsgleich. Zusätzlich ist eine der Drehachsen der Rollen (30b, c, e, f) deckungsgleich mit der Schwenkachse (31) für den Leitungsförderer (30). Und schliesslich sind die Antriebspfade der Schwenkachse (31) und der Förderrolle oder der angetriebenen Rolle (30b) getrennt.

## Beschreibung

Leitungstransportvorrichtung, insbesondere für zu bearbeitende Kabel in Kabelbearbeitungsmaschinen, gemäss dem Oberbegriff des Anspruchs 1, sowie Kabelbearbeitungsmaschine, mit zumindest zwei Bearbeitungsstationen für zumindest ein Ende eines Kabels, gemäss dem Oberbegriff des Anspruchs 10.

Eine entsprechende Vorrichtung ist in der WO2009/0141794A1 offenbart, wobei eine erste Antriebseinrichtung ortsfest mit einem Grundrahmen verbunden ist, um eine genau definierte Drehbewegung des Leitungsförderers um eine Schwenkachse zu bewirken. Eine zweite Antriebseinrichtung ist zur Betätigung des Leitungsförderers vorgesehen und ebenfalls ortsfest am Grundrahmen montiert. Dabei fällt die Antriebsachse der zweiten Antriebseinrichtung mit der Schwenkachse des Leitungsförderers zusammen. Die Übertragung der Schwenkbewegung des Leitungsförderers wird über einen Zahnriemen bewirkt, der symmetrisch zur Mitte der Drehung der Schwenkachse zwischen einer ersten Zwischenwelle gespannt ist, wobei auch eine zweite Zwischenwelle an dem Maschinenrahmen befestigt ist. Eine Nickachse des Leitungsförderers ist senkrecht zu den Antriebsachsen bzw. den Achsen der Zwischenwellen orientiert. Diese Vorrichtung weist also zwei örtlich getrennte Antriebsachsen auf, eine Achse zum Antrieb des oder der Fördermittel des Leitungsförderers und eine separate Antriebsachse für die Schwenkbewegung des gesamten Leitungsförderers.

Es war daher die Aufgabe der vorliegenden Erfindung eine Leitungstransportvorrichtung derart weiterzuentwickeln, dass sie bei einfacherem Aufbau und wirtschaftlicher Herstellung und Wartung eine höhere Dynamik aller Bewegungen zulässt. Eine weitere Aufgabe war es, eine Kabelbearbeitungsmaschine anzugeben, bei welcher für die integrierte Leitungstransportvorrichtung diese Vorteile realisiert sind.

Zur Lösung dieser Aufgaben sind die Merkmale der unabhängigen Ansprüche 1 und 10 vorgesehen. Weitere Merkmale und vorteilhafte Weiterbildungen sind in der Beschreibung, den Figuren und in den abhängigen Patentansprüchen dargelegt.

Der Ausgangspunkt ist dabei eine Leitungstransportvorrichtung mit einem schwenkbar gelagerten Leitungsförderer für eine einzuziehende und zu transportierende Leitung, mit einem vorzugsweise ortsfest mit einem Grundgestell verbundenen ersten Antrieb zur Erzielung einer genau definierten Schwenkbewegung des Leitungsförderers um eine Schwenkachse, mit zumindest einem angetriebenen Fördermittel, beispielsweise einer angetriebenen Förderrolle oder einem um zumindest eine Antriebsrolle und eine weitere Rolle laufenden Förderriemen, und einem gegenüberliegenden Andruckmittel, beispielsweise einer Andruckrolle oder einem um zumindest zwei Rollen laufenden Andruckriemen, welche Fördermittel und Andruckmittel auf dem schwenkbaren Leitungsförderer angeordnet sind, mit einem vorzugsweise ortsfest mit dem Grundgestell verbundenen zweiten Antrieb für zumindest die angetriebene Förderrolle oder die Antriebsrolle, wobei die Drehachsen aller Rollen parallel zueinander sowie parallel zur Schwenkachse des Leitungsförders verlaufen.

Zur Lösung der oben dargelegten Aufgabe ist diese Vorrichtung erfindungsgemäss dadurch gekennzeichnet, dass eine der Drehachsen der Rollen deckungsgleich mit der Schwenkachse für den Leitungsförderer ist, wobei aber dennoch die Antriebspfade der Schwenkachse und der Förderrolle oder der angetriebenen Rolle getrennt sind. Vorzugsweise ist dabei auch noch eine Antriebsachse des Antriebs für die Förderrollen oder die angetriebenen Rollen des Leitungsförderers mit einer der Drehachsen der Rollen deckungsgleich.

Durch die konstruktive Zusammenlegung der beiden Drehachsen, jener für die Schwenkbewegung des Leitungsförderers und jener für eine der Achsen der die Leitung fördernden Elemente des Leitungsförderers kann die Effizienz während der Schwenk- und der Förderbewegung gesteigert werden. Durch Einsparung eines Getriebes ist sowohl eine Kosteneinsparung als auch eine Gewichtsreduktion möglich. Dadurch wird auch das Trägheitsmoment der schwenkbaren Baugruppe des Leitungsförderers in Schwenkrichtung durch Verringerung der Masse und die Annäherung von Schwerpunkt zu Drehpunkt deutlich reduziert. Dadurch wird der Antrieb dynamischer und der Leistungsbedarf wird geringer verglichen mit Leitungsförderern nach Stand der Technik. Schliesslich wird auch das Umkehrspiel zwischen Vorwärts- und Rückwärtsförderung durch Wegfall des Antriebsriemens verringert.

Bevorzugt ist dabei die Antriebsachse deckungsgleich mit der Drehachse der Förderrolle oder der angetriebenen Rolle, wodurch die zuvor angegebenen Vorteile weiter gesteigert werden.

Eine vorteilhafte Ausführungsform sieht dabei vor, dass die Antriebsachse für den Leitungsförderer auch deckungsgleich mit der Schwenkachse für den Leitungsförderer ist.

Gemäss einer vorteilhaften Ausführungsform der Erfindung weist der Antriebspfad der Schwenkachse ein Antriebsmittel mit einer Antriebsachse und einen Schwenkriemen auf, welcher mittels der Antriebsachse bewegbar ist, wobei die Antriebsachse und die Schwenkachse parallel zueinander verlaufen.

Um die Beweglichkeit des Leitungsförderers zu erhöhen ist eine Ausführungsform der Erfindung dadurch gekennzeichnet, dass der Antriebspfad der Förderrollen oder der angetriebenen Rolle ein Antriebsmittel mit einer Antriebsachse aufweist, wobei eine flexible Wellenkupplung die Antriebsachse und die Förderrollen oder die angetriebenen Rollen verbindet.

Eine weitere erfindungsgemässe Ausführungsform ist dadurch gekennzeichnet, dass zumindest eine Andruckrolle oder eine der Rollen für einen Andruckgurt mittels des Antriebsmittels der Förderrollen oder der angetriebenen Rolle antreibbar ist, wobei entweder ein Antriebspfad von der Antriebsachse abzweigt oder ein Antriebspfad von einer anderen Rolle auf dem Leitungsförderer weiter zu einer Andruckrolle oder einer der Rollen für den Andruckgurt führt.

Bevorzugt ist das Andruckmittel in Richtung senkrecht auf die Drehachsen gegenüber dem Fördermittel verstellbar, sodass die Vorrichtung an unterschiedliche Kabeldimensionen angepasst werden kann.

Gemäss einer weiteren Ausführungsform der Erfindung verläuft eine Nickachse senkrecht zur Schwenkachse, auf welcher der Leitungsförderer verschwenkbar angebracht ist. Damit kann das aus dem Leitungsförderer herausragende Stück des geförderten Kabels abgesenkt oder angehoben werden, beispielsweise um es besser für weitere Bearbeitungsschritte positionieren zu können.

Dabei ist bevorzugt ein Antrieb für die Verschwenkung des Leitungsförderers um die Nickachse in zumindest einer Schwenkrichtung vorgesehen, und vorzugsweise beaufschlagt ein Federelement den Leitungsförderer entgegen der Wirkung des Antriebs. Dies vereinfacht die Positionierung des geförderten Kabels und die Rückstellung in die Stellung des Leitungsförderers zum Verschwenken bzw. den Leitungstransport.

Die eingangs gestellte Aufgabe wird auch gelöst durch eine Kabelbearbeitungsmaschine, mit zumindest zwei Bearbeitungsstationen für zumindest ein Ende eines Kabels, und einer Leitungstransportvorrichtung zur Förderung des Kabels in dessen Längsrichtung und zwischen den Bearbeitungsstationen, welche Vorrichtung wie in den obigen Absätzen dargelegt ausgeführt ist.

Bevorzugt ist dabei eine der Bearbeitungsstationen eine Crimpstation und die Leitungstransportvorrichtung ist um eine Nickachse vorzugsweise über einen Antrieb betätigbar beweglich montiert. Dabei erfolgt die Verschwenkung des der Nickachse entfernten Endes des Leitungsförderers mittels des Antriebs in Richtung auf ein in der Crimpstation angeordnetes Crimpuntergesenk hin und wird die Bewegung in Gegenrichtung vorzugsweise durch Beaufschlagung mit einem Federelemente bewirkt.

In besonders vorteilhafter Weise ist der Antrieb durch den in der Crimpstation vorhandene Pressschlitten und einen daran befestigten Stössel gebildet, welcher den Leitungsförderer zu Beginn des Crimpprozesses nach unten drückt.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: beispielhaft eine Ansicht der erfindungsgemässen Leitungstransportvorrichtung von oben,

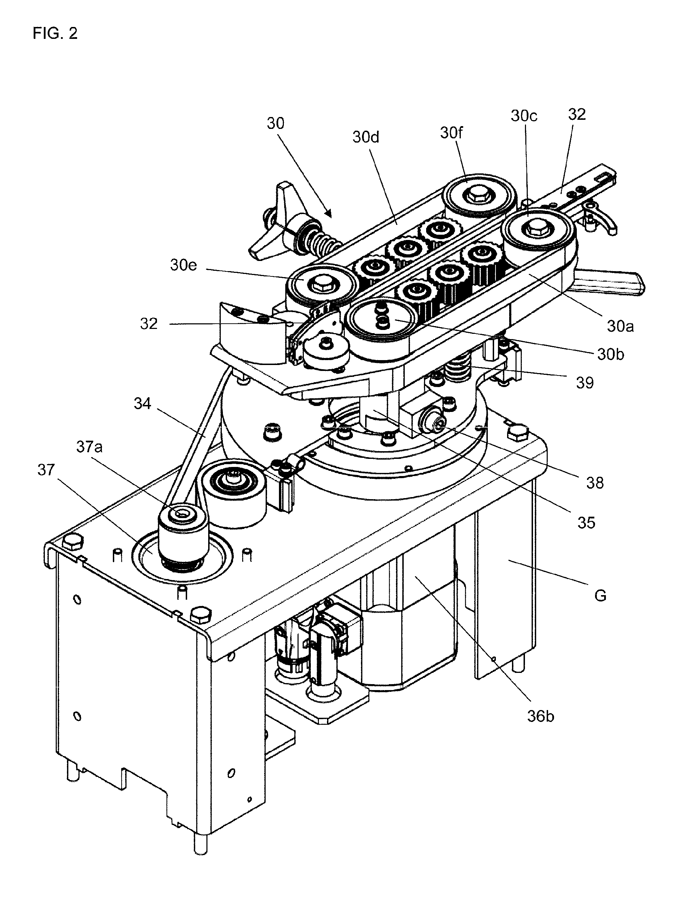

- Fig. 2: eine perspektivische Ansicht der Leitungstransportvorrichtung der Fig. 1 mit dem Leitungsförderer in einer ersten Schwenkposition,

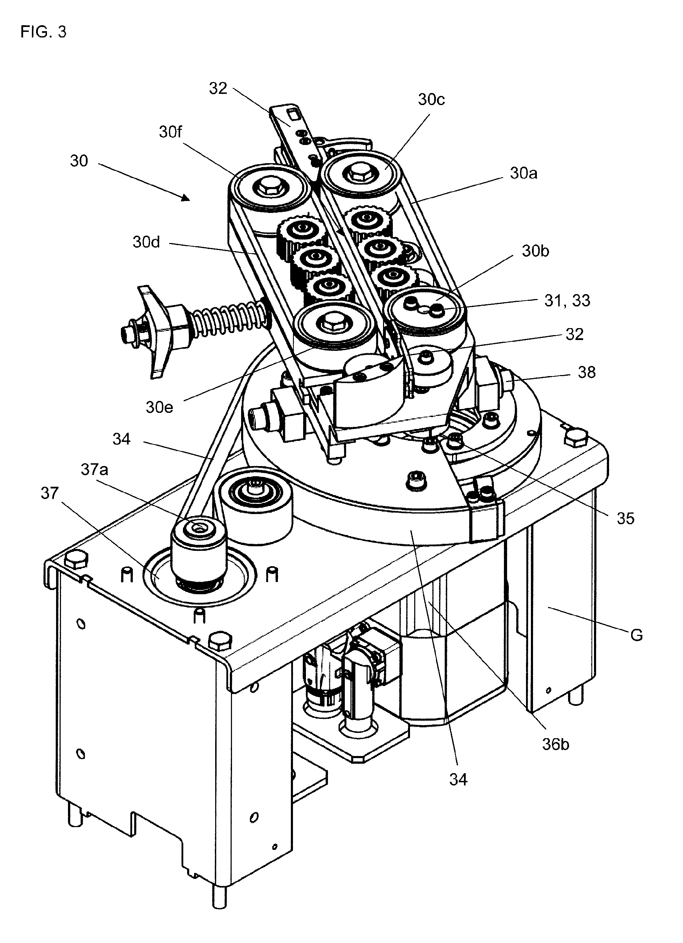

- Fig. 3: eine Ansicht entsprechend Fig. 2 mit dem Leitungsförderer in einer zweiten Schwenkposition,
- Fig. 4: eine Seitenansicht der Leitungstransportvorrichtung der Fig. 1 bis 3 mit dem Leitungsförderer in abgesenkter Position,

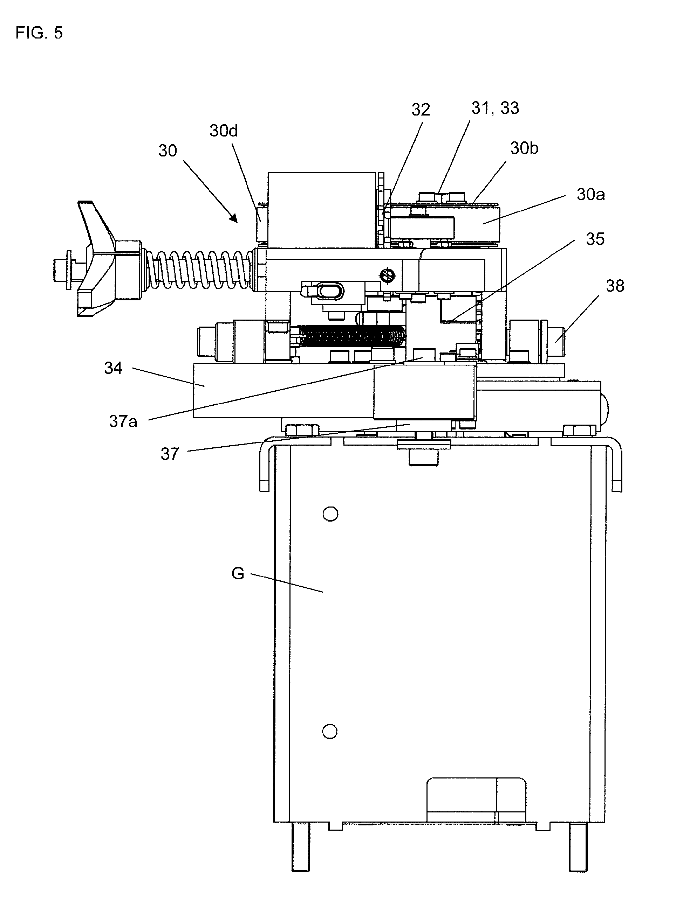

- Fig. 5: eine Ansicht der Leitungstransportvorrichtung der Fig. 1 von vorne, mit dem Leitungsförderer in der horizontal ausgerichteten Stellung zum Fördern des Kabels, und

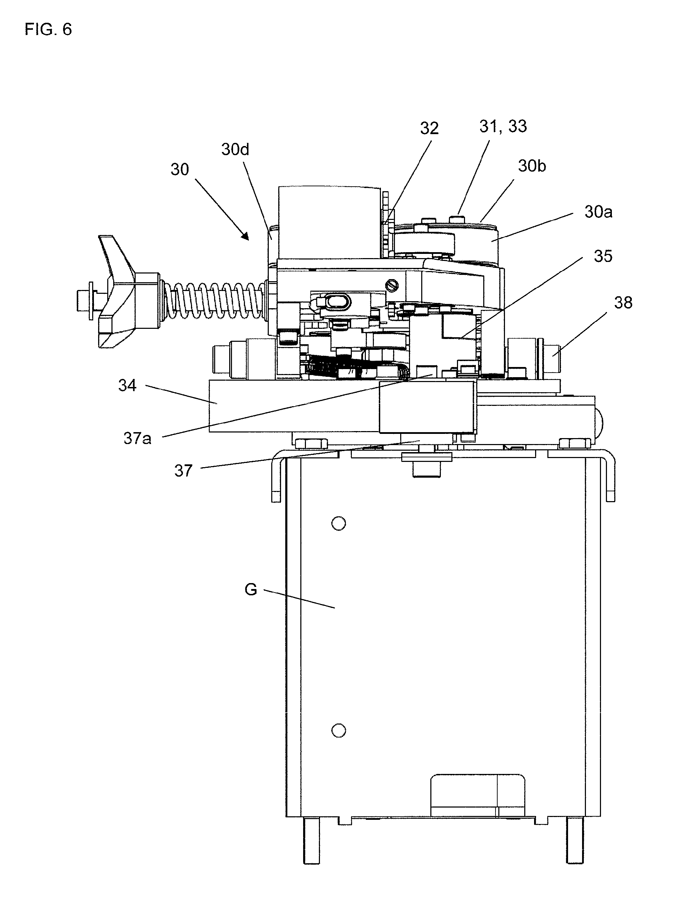

- Fig. 6: eine Ansicht entsprechend Fig. 5, jedoch mit dem Leitungsförderer in abgesenkter Stellung entsprechend der Fig. 4.

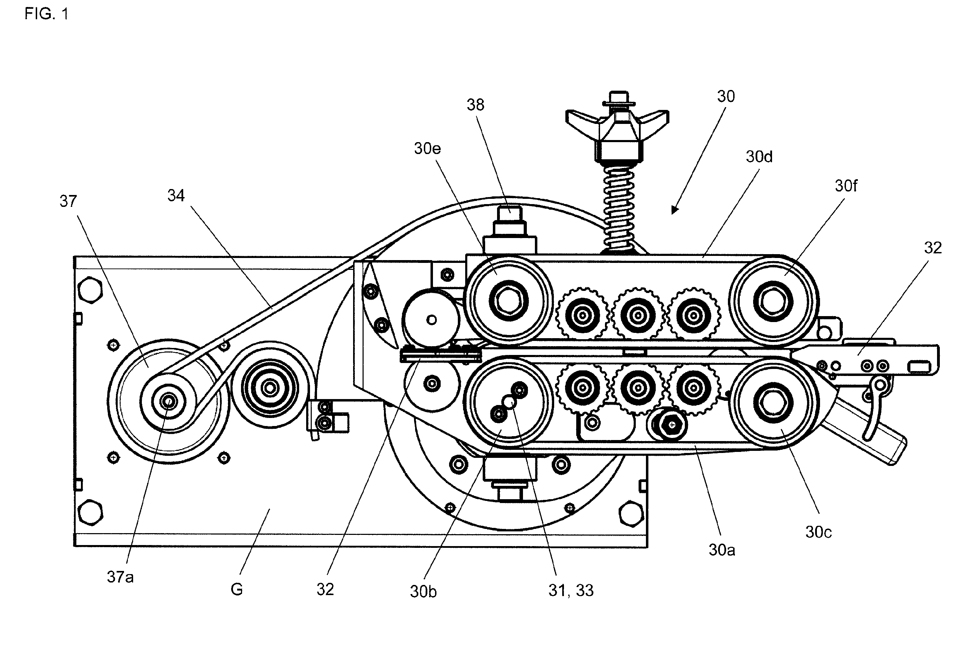

Wie in Fig. 1 zu erkennen ist, umfasst die erfindungsgemässe Leitungstransportvorrichtung ein Grundgestell G, auf welchem ein Leitungsförderer 30 zumindest um eine erste Achse 31 schwenkbar montiert ist. Die Achse 31 ist üblicherweise im Wesentlichen vertikal orientiert, so dass die Bewegung des Leitungsförderers 30-als auch des durch diesen transportierten Kabels - in einer im Wesentlichen horizontalen Ebene erfolgt. Durch die Schwenkbewegung des Leitungsförderers 30 kann das Kabelende eines darüber hinausragenden, transportierten Kabels oder jeder gleichartigen Leitung zu unterschiedlichen, entlang vorzugsweise eines Kreisbogens angeordneten Bearbeitungsstationen transportiert werden. Typischerweise ist eine dieser Bearbeitungsstationen in einer Kabelbearbeitungsmaschine, in welche ein Kabel mittels des Leitungsförderers 30 eingezogen werden soll, eine Crimpstation.

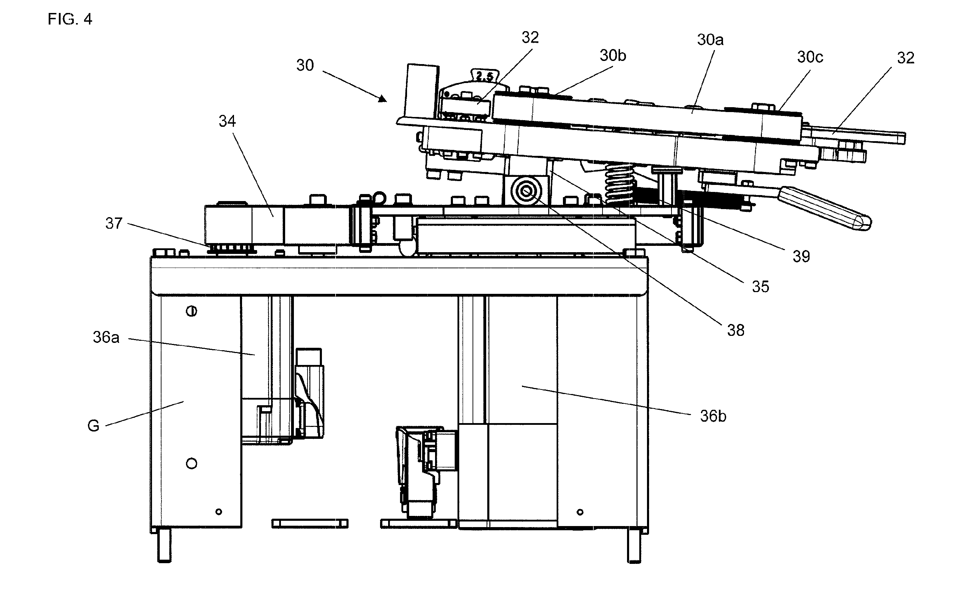

Ortsfest mit dem Grundgestell G der Vorrichtung ist ein erster Antrieb 36a verbunden, mit dem eine genau definierte Schwenkbewegung des Leitungsförderers 30 um eine Schwenkachse 31 bewirkt werden kann. Die Energie für diese Schwenkbewegung wird mittels eines Schwenkriemens 34 übertragen. Dieser vorzugsweise als Zahnriemen ausgeführte Schwenkriemen 34 läuft über eine Antriebswelle 37, welche eine Antriebsachse 37a des Antriebs 36a für den Leitungsförderer 30 definiert, die vorzugsweise parallel zur Schwenkachse 31 des Leitungsförderers 30 ist (siehe Fig. 4). Allenfalls kann auch eine Anordnung vorgesehen sein, bei welcher eine Antriebsachse für den Leitungsförderer 30 mit dessen Schwenkachse 31 zusammenfällt.

Die Förderung des Kabels erfolgt durch zumindest ein auf dem Leitungsförderer 30 sitzendes angetriebenes Fördermittel 30a, insbesondere eine angetriebene Förderrolle oder vorzugsweise einen um zumindest eine Antriebsrolle 30b und eine weitere Rolle 30c laufenden Förderriemen. Vorteilhafterweise ist das Kabel zwischen diesem Fördermittel 30a und einem ebenfalls auf dem Leitungsförderer 30 sitzenden gegenüberliegenden Andruckmittel 30d eingespannt, welches beispielsweise eine Andruckrolle oder ein zumindest um zwei Rollen 30e, 30f laufender Andruckriemen sein kann. Das Fördermittel 30a bzw. dessen Antriebsrolle 30b sind antriebsmässig mit einem vorzugsweise ortsfest mit dem Grundgestell G verbundenen Antrieb 36b verbunden. Dies kann vorteilhafterweise über eine flexible Wellenkupplung 35 bewerkstelligt werden, um Nickbewegungen des Leitungsförderers 30 aus der im Wesentlichen horizontalen Ebene des Verschwenkens um die Achse 31 heraus zu ermöglichen. Das Andruckmittel 30d ist vorzugsweise gegenüber dem Fördermittel 30a verstellbar auf dem Leitungsförderer 30 montiert, kann allenfalls auch durch eine elastische Anordnung mit einer Federkraft auf das Fördermittel 30a beaufschlagt sein, um Kabel mit unterschiedlichem Durchmesser dazwischen aufnehmen zu können. Auch könnte das Andruckmittel 30d selbst auch angetrieben sein. Die Drehachsen aller Rollen 30b, c, e, f sind vorzugsweise parallel zueinander und verlaufen vorzugsweise auch parallel zur Schwenkachse 31 des Leitungsförders 30. Damit sind diese Drehachsen vorzugsweise auch parallel zur Achse 37a des Antriebs für die Verschwenkung des Leitungsförderers 30 um die Achse 31.

Die Wellenkupplung 35 ist an der Unterseite der angetriebenen Rolle 30b angeschlossen, so dass die Antriebsachse 33 des Fördermittels 30a nicht nur parallel zur Achse dieser Rolle 30b liegt sondern vorzugsweise sogar deckungsgleich damit ist - und vorzugsweise auch mit der Schwenkachse 31 des Leitungsförderers 30 zusammenfällt. Somit wird zwischen dem Antrieb 36b für das Fördermittel 30a und dem Leitungsförderer 30 kein Getriebe mehr benötigt.

Besonders vorteilhaft ist dabei die deckungsgleiche Anordnung einer der Rollen 30b, c, e, f, vorzugsweise wieder der angetriebenen Rolle 30b, mit der Schwenkachse 31 für den Leitungsförderer 30. Die Antriebspfade der Schwenkachse 31 und der Förderrolle oder der angetriebenen Rolle 30b sind jedoch getrennt, so dass eine einfache unabhängige Ansteuerung der Antriebe 36a,b und damit eine einfache unabhängige Bewegung des Fördermittels 30a zum Transport des Kabels in dessen Längsrichtung und des Leitungsförderers 30 zu dessen Verschwenkung möglich sind.

In der in den Zeichnungsfiguren dargestellten Ausführungsform einer erfindungsgemässen Leitungstransportvorrichtung sind die beiden Konstruktionsachsen 31 der Schwenkbewegung des Leitungsförderers 30, also die Schwenkachse 31 und die Antriebsachse 33 des Leitungsförderers 30, also die angetriebene Achse 33 der angetriebenen Rolle 30b in einer Konstruktionsachse 31,33 zusammengelegt. Sowohl der Antrieb 36b für die Bandförderrolle 30b ist gestellfest am Grundgestell G montiert und ebenso ist der Antrieb 36a für die Schwenkfunktion des Leitungsförderers 30 gestellfest und im dargestellten Ausführungsbeispiel getrennt vom Antrieb 36b am Gestell G montiert. Allenfalls können die Antriebe 36a, b in einem Aggregat aber mit separaten Antriebswellen zusammengefasst sein. Die Schwenkachse 31 ist weiters auch identisch mit der Mittenachse 33 der angetriebenen Bandförderrolle 30b.

Es sei noch erwähnt, dass durch die erfindungsgemässe Vereinigung von Schwenk- und Bandförderachse der Leitungsförderer 30 um eine Drehachse 31.außerhalb der Leitungsachse und der Leitungsführung 32 schwenkt. Dies führt zu einer ungünstigen Änderung des Schwenkverhaltens, wodurch eine Schlaufenbildung durch die Schwenkbewegung begünstigt wird, die aber durch eine geschickte Wahl des Durchmessers der Bandfördermittel 30a sowie des Winkels unter dem die Leitungsführung 32 zur Leitungsachse steht, auf ein akzeptables Maß begrenzt werden kann. Die Schwenkachse 31 des Leitungsförderers 30 ist wie oben erläutert deckungsgleich mit der Mittenachse der angetriebenen Rolle 30b des Fördermittels 30a.

Beim Schwenken des Leitungsförderers 30 beschreibt der Eintrittspunkt der Leitungsführung 32 einen Kreisbogen um die Schwenkachse 31. Bedingt durch diesen Kreisbogen wandert beim Schwenken bis ca. 30° der Leitungsführungs-Eintrittspunkt zunächst um eine kurze Wegstrecke in Richtung der in den Zeichnungsfiguren 1 bis 3 von links kommenden Leitungszuführung 32. Es würde sich also eine geringe Leitungsschlaufe vor dem Leitungseintritt in die Leitungsführung 32 bilden. Gleichzeitig wird die Leitungszuführung bei 30° gegenüber der 0° Zuführung seitlich um eine entsprechende Wegstrecke annähernd parallel versetzt. Der Abstand zu vorgelagerten Leitungsführungs-Einheiten, z.B. zum Richtwerk soll deshalb relativ groß sein, um eine annähernde Parallelität sicherzustellen. Im Bereich zwischen 30° und 60° Verschwenkung wandert der Leitungsführungs-Eintrittspunkt wieder in Richtung Schwenkachse 31. Die vorher vorhandene Leitungsschlaufe würde also durch diesen Effekt geglättet und zusätzlich würde noch Leitung aus dem Vorrat von links nachgezogen. Wenn nun wieder auf 0° zurückgeschwenkt wird, verbleibt diese Leitungsschlaufe vor der Leitungsführung 32.

Solche Leitungsschlaufen müssen beim Fördern zunächst mit moderater Beschleunigung glattgezogen werden. Ruckweises Beschleunigen könnte die Leitung eventuell schädigen oder überdehnen. Das Leitungsablängen / -fördern erfolgt in der 0°-Schwenkposition. Ziel der Konstruktion ist also, für die 0°-Schwenkposition eine möglichst kleine Schlaufenbildung zu erzielen. Zu beachten ist vor allem, daß die Leitung nach dem Trennen und beim Abisolieren um ca. 25 mm rückwärts gefördert wird, so daß schon bei diesem Prozeß eine Leitungsschlaufe zwischen Leitungsführungs-Eintritt und Richtwerk entsteht. Die theoretisch durch den Schwenkprozeß zusätzlich entstehende Leitungsschlaufenlänge ist bei der vorliegenden Erfindung kürzer als die beim Trenn-Abisolierprozeß erzeugte Leitungsschlaufe, so daß der Schwenkprozeß die Schlaufenbildung nicht negativ beeinflusst.

Wie weiter oben beschrieben kann der Leitungsförderer 30 nicht nur um die Achse 31 im Wesentlichen horizontal verschwenkt werden. Auch ein Schwenken um die Nickachse 38 aus dieser horizontalen Schwenkebene heraus ist möglich, was vorzugsweise durch einen weiteren Antrieb bewerkstelligt wird. Die Rückstellung in die horizontale oder jede andere Ebene senkrecht zur Achse 31 wird vorzugsweise durch ein Federelement 39 bewirkt.

Typischerweise kommt die erfindungsgemässe Kabeltransportvorrichtung in Verbindung mit einer Kabelbearbeitungsmaschine mit zumindest zwei Bearbeitungsstationen für zumindest ein Ende eines Kabels zum Einsatz. Es wird in diesem Fall die Förderung des Kabels in dessen Längsrichtung und zwischen den normalerweise entlang eines Kreissegments verteilten Bearbeitungsstationen transportiert. Eine dieser Bearbeitungsstationen ist eine Crimpstation, in welcher das Kabelende zum Aufbringen eines Crimpbauteils nicht nur axial gefördert sondern auch in die Crimpstation, insbesondere ein darin angeordnetes Crimpuntergesenk, abgesenkt werden muss. Für diese Konstellation ist es vorteilhafterweise möglich, dass der Antrieb zur Absenkung des der Nickachse 38 entfernten Endes des Leitungsförderers 30 mittels - auf das in der Crimpstation angeordnete Crimpuntergesenk - durch den in der Crimpstation vorhandene Pressschlitten und einen daran befestigten Stössel gebildet ist. Dieser Stössel wirkt bei der Abwärtsbewegung des Pressschlittens zu Beginn des Crimpprozesses auf den Leitungsförderer 30 ein und drückt dessen der Nickachse 38 entfernte Ende gegen die Wirkung des Federelements 39 nach unten. Beim Öffnen des Crimpwerkzeuges, d.h. beim Hochfahren des Pressschlittens, hebt sich auch der Stössel und das Federelement 39 kann den Leitungsförderer 30 wieder in die im Wesentlichen senkrecht zur Achse 31 liegende Ebene zurückschwenken.

### Liste der Bezugszeichen

- 30: Leitungsförderer
- 30a: Fördermittel
- 30b: Angetriebene Rolle für Fördermittel
- 30c: Rolle für Fördermittel
- 30d: Andruckmittel
- 30e, f: Rollen für Andruckmittel
- 31: Schwenkachse
- 32: Leitungsführung
- 33: Achse der angetriebenen Rolle
- 34: Schwenkriemen
- 35: Flexible Wellenkupplung
- 36a: Antriebsmotor für Leitungsförderer
- 36b: Antriebsmotor für Bandförderrolle
- 37: Antriebswelle für Leitungsförderer
- 37a: Achse des Antriebs für Leitungsförderer
- 38: Nickachse
- 39: Federelement
- G: Grundgestell der Leitungstransportvorrichtung

## Patentansprüche

1. Leitungstransportvorrichtung, insbesondere für zu bearbeitende Kabel in Kabelbearbeitungsmaschinen, mit einem schwenkbar gelagerten Leitungsförderer (30) für eine einzuziehende und zu transportierende Leitung, mit einem vorzugsweise ortsfest mit einem Grundgestell (G) verbundenen ersten Antrieb (36a) zur Erzielung einer genau definierten Schwenkbewegung des Leitungsförderers (30) um eine Schwenkachse (31), mit zumindest einem angetriebenen Fördermittel (30a), beispielsweise einer angetriebenen Förderrolle oder einem um zumindest eine Antriebsrolle (30b) und eine weitere Rolle (30c) laufenden Förderriemen, und einem gegenüberliegenden Andruckmittel (30d), beispielsweise einer Andruckrolle oder einem um zumindest zwei Rollen (30e, 30f) laufenden Andruckriemen, welche Fördermittel (30a) und Andruckmittel (30d) auf dem schwenkbaren Leitungsförderer (30) angeordnet sind, mit einem vorzugsweise ortsfest mit dem Grundgestell (G) verbundenen zweiten Antrieb (36b) für zumindest die angetriebene Förderrolle oder die Antriebsrolle (30b), wobei die Drehachsen aller Rollen (30b, c, e, f) parallel zueinander sowie parallel zur Schwenkachse (31) des Leitungsförderers (30) verlaufen, **dadurch gekennzeichnet, dass** eine der Drehachsen der Rollen (30b, c, e, f) deckungsgleich mit der Schwenkachse (31) für den Leitungsförderer (30) ist, wobei vorzugsweise eine Antriebsachse des Antriebs (36b) für die Förderrollen oder die angetriebenen Rollen (30b) des Leitungsförderers (30) mit einer der Drehachsen der Rollen (30b, c, e, f) deckungsgleich ist, und dass jedoch die Antriebspfade der Schwenkachse (31) und der Förderrolle oder der angetriebenen Rolle (30b) getrennt sind.

2. Vorrichtung nach Anspruch 1, **dadurch gekennzeichnet, dass** die Antriebsachse der Förderrolle oder der angetriebenen Rolle (30b) deckungsgleich mit der Drehachse (33) der Förderrolle oder der angetriebenen Rolle (30b) ist.

3. Vorrichtung nach Anspruch 1 oder 2, **dadurch gekennzeichnet, dass** die Antriebsachse (37a) für den Leitungsförderer (30) deckungsgleich mit der Schwenkachse (31) für den Leitungsförderer (30) ist.

4. Vorrichtung nach einem der Ansprüche 1 bis 3, **dadurch gekennzeichnet, dass** der Antriebspfad der Schwenkachse (31) ein Antriebsmittel mit einer Antriebsachse (37a) und einen Schwenkriemen (34) aufweist, welcher mittels der Antriebsachse (37a) bewegbar ist, wobei die Antriebsachse (37a) und die Schwenkachse (31) parallel zueinander verlaufen.

5. Vorrichtung nach einem der Ansprüche 1 bis 4, **dadurch gekennzeichnet, dass** der Antriebspfad der Förderrollen oder der angetriebenen Rolle (30b) einen Antrieb (36b) mit einer Antriebsachse aufweist, wobei eine flexible Wellenkupplung (35) die Antriebsachse und die Förderrollen oder die angetriebenen Rollen (30b) verbindet.

6. Vorrichtung nach einem der Ansprüche 1 bis 5, **dadurch gekennzeichnet, dass** zumindest eine Andruckrolle oder eine der Rollen (30e, 30f) für einen Andruckgurt (30d) mittels des Antriebs (36b) der Förderrollen oder der angetriebenen Rolle (30b) antreibbar ist, wobei entweder ein Antriebspfad von der Antriebsachse abzweigt oder ein Antriebspfad von einer anderen Rolle auf dem Leitungsförderer (30) weiter zu einer Andruckrolle oder einer der Rollen (30e, f) für den Andruckgurt (30d) führt.

7. Vorrichtung nach einem der Ansprüche 1 bis 6, **dadurch gekennzeichnet, dass** das Andruckmittel (30d) in Richtung senkrecht auf die Drehachsen gegenüber dem Fördermittel (30a) verstellbar ist.

8. Vorrichtung nach einem der Ansprüche 1 bis 7, **dadurch gekennzeichnet, dass** eine Nickachse (38) senkrecht zur Schwenkachse (31) verläuft, auf welcher der Leitungsförderer (30) verschwenkbar angebracht ist.

9. Vorrichtung nach Anspruch 8, **dadurch gekennzeichnet, dass** ein Antrieb für die Verschwenkung des Leitungsförderers (30) um die Nickachse (38) in zumindest einer Schwenkrichtung vorgesehen ist, und vorzugsweise ein Federelement (39) den Leitungsförderer (30) entgegen der Wirkung des Antriebs beaufschlagt.

10. Kabelbearbeitungsmaschine, mit zumindest zwei Bearbeitungsstationen für zumindest ein Ende eines Kabels, und einer Leitungstransportvorrichtung zur Förderung des Kabels in dessen Längsrichtung und zwischen den Bearbeitungsstationen, **dadurch gekennzeichnet, dass** die Leitungstransportvorrichtung gemäss einem der Ansprüche 1 bis 9 ausgeführt ist.

11. Maschine nach Anspruch 10, **dadurch gekennzeichnet, dass** eine der Bearbeitungsstationen eine Crimpstation und die Leitungstransportvorrichtung gemäss einem der Ansprüche 8 oder 9 ausgeführt ist, wobei die Verschwenkung des der Nickachse (38) entfernten Endes des Leitungsförderers (30) mittels des Antriebs in Richtung auf ein in der Crimpstation angeordnetes Crimpuntergesenk hin erfolgt und die Bewegung in Gegenrichtung vorzugsweise durch Beaufschlagung mit einem Federelement (39) bewirkt wird.

12. Maschine nach Anspruch 11, **dadurch gekennzeichnet, dass** der Antrieb durch den in der Crimpstation vorhandene Pressschlitten und einen daran befestigten Stössel gebildet ist, welcher den Leitungsförderer (30) zu Beginn des Crimpprozesses nach unten drückt.
